# EUROPÄISCHE PATENTSCHRIFT

(11) **EP 0 992 724 B1**
(45) Veröffentlichungstag und Bekanntmachung des Hinweises auf die Patenterteilung: **05.11.2003**
(21) Anmeldenummer: 99117114.1
(22) Anmeldetag: 31.08.1999
(51) Int. Cl.: F16K 5/06, F16K 11/087

(54) **Kugelhahn**
Ball valve
Robinet à tournant sphérique

(30) Priorität: 07.10.1998 DE 19846084
(43) Veröffentlichungstag der Anmeldung: 12.04.2000
(73) Patentinhaber: Georg Fischer Rohrleitungssysteme AG, 8201 Schaffhausen (CH)
(72) Erfinder: Miklo, Jürgen, 8240 Thayngen (CH)
(74) Vertreter: Weiss, Wolfgang, Dr.

(56) Entgegenhaltungen:
- DE-U- 29 805 106
- FR-A- 2 202 572
- US-A- 4 206 904
- US-A- 4 262 691
- US-A- 4 467 823
- US-A- 4 637 421
- PATENT ABSTRACTS OF JAPAN vol. 008, no. 100 (M-295), 11. Mai 1984 (1984-05-11) & JP 59 013170 A (TLV KK), 23. Januar 1984 (1984-01-23)

## Beschreibung

Die Erfindung betrifft einen Kugelhahn nach dem Oberbegriff des Anspruchs 1.

Bei gattungsgemässen, mit einem einstückigen Gehäuse versehenen Kugelhähnen wird die Kugel über eine Fluidöffnung in das Gehäuse eingesetzt. Um die im Gehäuse aufgenommene Kugel drehen zu können, was mit dem Betätigen des Kugelhahns gleichzusetzen ist, ist im Normalfall eine kraft- und/oder formschlüssig mit der Kugel verbundener Zapfen vorgesehen, welche durch die Wandung des Gehäuses nach aussen geführt und endseitig mit einem Betätigungshebel versehen ist. Der mit der Kugel verbundene Zapfen wirkt gleichzeitig als Lagerbolzen, welcher die Kugel einseitig abstützt. Zum Abdichten der Kugel gegenüber den Fluidöffnungen (Ein- und Auslässe) des Kugelhahns sind hohlzylindrisch ausgebildete Einschraubelemente vorgesehen, deren Stirnflächen mit ringförmigen Kugel-Dichtungen versehen sind. Diese Einschraubelemente werden in Innengewinde der Fluidöffnungen eingeschraubt, so dass sich die Kugel-Dichtungen satt an der Kugel anlegen. Nachteilig an derartig ausgebildeten Kugelhähnen ist, dass die Dichtungen auch Lateralkräfte der Kugel aufnehmen müssen, da die Kugel, durch den vorherrschenden Fluiddruck, beim Verschliessen von Fluidöffnungen die Tendenz hat, seitlich auszuweichen. Da die Kugel nur einseitig gelagert ist und die Kugel-Dichtungen prinzipbedingt elastisch sein müssen, bewirken diese Lateralkräfte Lateralbewegungen der Kugel, welche zu Undichtigkeiten der Armatur führen können. Zudem unterliegen solche Dichtungen einem übermässig hohen Verschleiss. Ausserdem eignen sich derartige Kugelhähne nur für vergleichsweise geringe Fluiddrücke.

Aus der JP 59013170 A2 ist ein gattungsgemässer Mehrwegekugelhahn bekannt. In einem Ventilgehäuse mit drei Fluidöffnungen ist eine Kugel mit einem L-förmigen Durchlasskanal angeordnet. Die Kugel ist entlang der Drehachse durchbohrt und nimmt in dieser Bohrung ein Lagerelement auf, das den Durchlasskanal senkrecht durchquert. Eine Fluidöffnung, die als Zutrittsöffnung dient, ist mit einem Innengewinde versehen. Die weiteren zwei Fluidöffnungen, die wahlweise als Austrittsöffnungen dienen, sind mit an die Kugel federnd anliegenden Dichtungselementen versehen. Eine Austrittsöffnung ist einstückig mit dem Gehäuse ausgebildet. Die andere Austrittsöffnung wird von einer Einschraubmuffe gebildet.

Es ist daher die Aufgabe der Erfindung, einen gemäss dem Oberbegriff des Anspruchs 1 ausgebildeten Kugelhahn derart zu verbessern, dass dieser langzeitstabil sicher dichtet und ausserdem einfach und kostengünstig zu fertigen ist.

Diese Aufgabe wird durch die im Kennzeichen des Anspruchs 1 angeführten Merkmale gelöst.

Der Grundgedanke der beschriebenen Ausführungsform besteht darin, ein zweites Lager für die Kugel vorzusehen, mittels welchem Lateralbewegungen der Kugel weitgehend verhindert werden können, wobei die Kugel nach wie vor auf einfache Art und Weise von aussen in das Gehäuse einsetzbar sein soll.

Bevorzugte Ausführungsformen der Erfindung sind in den abhängigen Ansprüchen 2 bis 11 umschrieben.

Anhand von Zeichnungen wird nachfolgend ein bevorzugtes Ausführungsbeispiel der Erfindung näher umschrieben. In diesen Zeichnungen zeigt:
Fig. 1 eine perspektivische Aussenansicht des Gehäuses;
Fig. 2 eine perspektivische Ansicht der Kugel;
Fig. 3 das Gehäuse in einer Ansicht von oben;
Fig. 4 einen Teil-Schnitt entlang der Linie A-A in Fig. 3;
Fig. 5 einen Querschnitt durch das Gehäuse und die Kugel beim Einsetzen der letzteren in das Gehäuse;
Fig. 6 einen Querschnitt durch den zusammengesetzten Kugelhahn, und
Fig. 7 einen horizontalen Längsschnitt durch den zusammengesetzten Kugelhahn.

Da die grundsätzliche Gestaltung von derartigen Kugelhähnen bekannt ist, wird nachfolgend nur auf die im Zusammenhang mit der vorliegenden Erfindung relevanten Merkmale eingegangen.

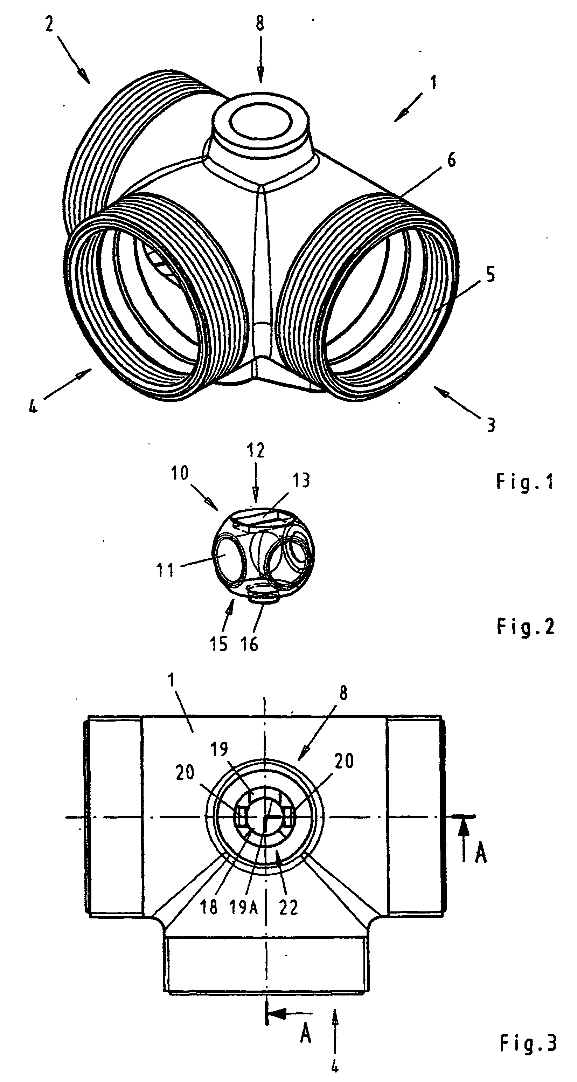

Fig. 1 zeigt in perspektivischer Darstellung eine Aussenansicht eines T-förmig gestalteten Gehäuses 1 für einen 3-Weg-Kugelhahn. Das Gehäuse 1 ist einstückig ausgebildet und weist drei Fluidöffnungen 2, 3, 4 auf, welche mit je einem Innengewinde 5 und einem Aussengewinde 6 versehen sind. Zwei dieser Fluidöffnungen 2, 3 sind koaxial zueinander angeordnet, währenddem die dritte Fluidöffnung 4 im rechten Winkel dazu verläuft. Das Gehäuse 1 ist zudem mit einer vertikal verlaufenden Bohrung 8 zur Aufnahme eines Zapfens versehen, wie anschliessend noch näher erläutert wird.

In der Fig. 2 ist die in das Gehäuse gemäss Fig. 1 einzusetzende Kugel 10 in einer perspektivischen Ansicht dargestellt. Die Kugel 10 weist eine L-Förmig gestaltete Fluid-Bohrung 11 auf. Auf der Ober- und der Unterseite ist die Kugel 10 mit Abflachungen 12, 15 versehen. In die obere Abflachung 12 ist eine rechteckige Ausnehmung 13 eingelassen, währenddem aus der unteren Abflachung 15 ein Lagerelement 16 vorsteht.

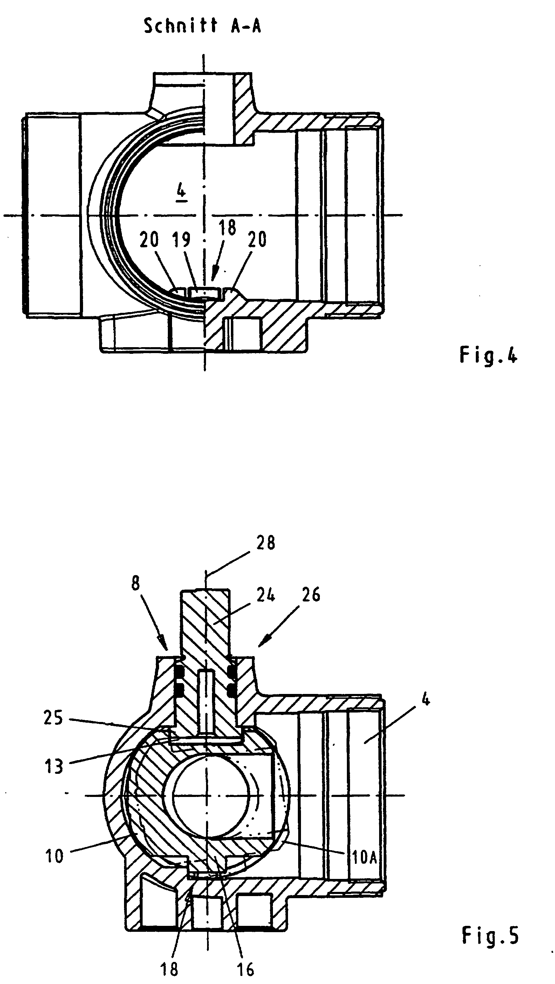

Die Fig. 3 zeigt das Gehäuse 1 in einer Ansicht von oben und die Fig. 4 in einem Schnitt entlang der Linie A-A in Fig. 3. Aus diesen beiden Figuren ist eine als Aussparung 18 ausgebildete Führung ersichtlich, welche der Aufnahme des Führungselements dient und mit diesem zusammen eine untere Lagerstelle für die Kugel bildet. Diese Aussparung 18 wird von drei einstückig mit dem Gehäuse 1 ausgebildeten Stegen 19, 20 begrenzt. Der zentrale Steg 19 weist eine konkav ausgebildete Stirnfläche 19A auf, deren Radius mit dem Radius des Lagerelements der Kugel korrespondiert. Das Gehäuse 1 ist im vorliegenden Fall so ausgebildet, dass die Kugel über die dritte Fluidöffnung 4 in das Gehäuse 1 eingeführt werden kann. Um das Lagerelement 16 der Kugel 10 (Fig. 2) in die Aussparung 18 einführen zu können, weist die Aussparung 18 eine Öffnung 22 auf, welche mit der dritten Fluidöffnung 4 fluchtet.

Anhand der Fig. 5 soll das Einsetzen der Kugel 10 in das Gehäuse 1 näher erläutert werden. Bevor die Kugel 10 in das Gehäuse 1 eingesetzt wird, wird ein Zapfen 24 von der Gehäuseinnenseite her in die Bohrung 8 eingeführt. Der Zapfen 24 besitzt einen als Anschlagbund dienenden Endteil 25, der in der Form mit der Ausnehmung 13 auf der Oberseite der Kugel 10 korrespondiert. Nach dem Einsetzen des Zapfens 24 kann die Kugel 10 über die dritte Fluidöffnung 4 in das Gehäuse 1 eingesetzt und das Führungslement 16 über die Öffnung in die Aussparung 18 eingeführt werden. Damit der Endteil 25 des Zapfens 24 in der Ausnehmung 13 der Kugel 1 aufgenommen werden kann, wird die Kugel 1 beim Einsetzen in das Gehäuse 1 leicht schräggestellt, was durch eine mittels unterbrochenen Linien eingezeichnete Kugel 10A angedeutet ist. Der in der Bohrung 8 des Gehäuses 1 abgestützte Zapfen 24 bildet somit eine obere Lagerstelle 26. Die Drehachse der Kugel 10 ist mit dem Bezugszeichen 28 versehen. Die beiden Lagerstellen 26, 27 sind auf einander diametral gegenüberliegenden Seiten der Kugel 10 angeordnet. Zum Verdrehen des Zapfens 24 ist ein Betätigungshebel (nicht eingezeichnet) vorgesehen, der endseitig auf den Zapfen 24 aufgesteckt wird.

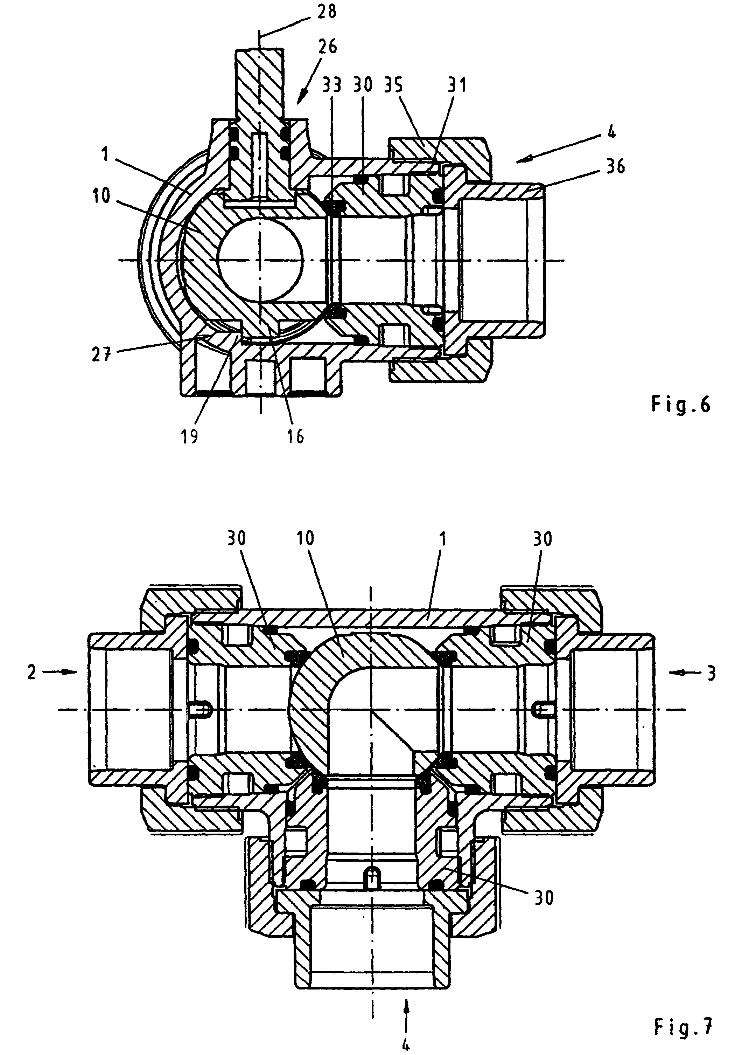

Fig. 6 zeigt einen Querschnitt durch den zusammengesetzten Kugelhahn. Um die Kugel 10 in der endgültigen Position zu fixieren, ist ein hohlzylindrisch ausgebildetes Einschraubteil 30 vorgesehen, welches mit einem Aussengewinde 31 versehen ist. Dieses Einschraubteil 30 ist auf der vorderen Stirnseite mit einer Kugel-Dichtung 33 versehen, mittels welcher die Kugel 10 gegenüber dem Gehäuse 1 bzw. den Fluidöffnungen abgedichtet wird. Das Einschraubteil 30 wird mit einer vorbestimmten Kraft angezogen, so dass sich die Kugeldichtung 33 satt an die Kugel 10 anlegt. Nachdem die Kugel 10 in das Gehäuse 1 eingesetzt ist, wird das Einschraubteil 30 in die dritte Fluidöffnung 4 eingeschraubt, wodurch sich das Lagerelement 16 der Kugel 10 an dem zentralen, die Aussparung nach hinten begrenzenden Steg 19 anlegt und die Kugel 10 in der Aussparung fixiert. Danach können in die beiden anderen Fluidöffnungen ebenfalls entsprechende Einschraubteile eingeschraubt werden. Da bei gattungsgemässen Kugelhähnen ohnehin Einschraubelemente vorgesehen sind, kann die Kugel mittels eines Einschraubelements auf einfache Weise fixiert werden. Auf das Aussengewinde der Fluidöffnung 4 kann eine Überwurfmutter 35 aufgeschraubt werden, welche einen Anschluss-Flansch 36 fixiert. Aufgrund des Anzugsmoments des Einschraubteils 30 kann das Betätigungsmoment des Kugelhahns bestimmt bzw. verändert werden.

In bezug auf die Ausbildung der unteren Lagerstelle wurde bei der vorliegenden Ausführungsform darauf geachtet, dass die Führung 18 die im Betrieb auftretenden Lateralkräfte aufnehmen kann. Die auf die Kugel 10 einwirkenden Lateralkräfte werden durch den vorherrschenden Fluiddruck beim Verschliessen von Fluidöffnungen bewirkt. Die Führung 18 und das Lagerelement 16 der Kugel 10 wirken derart zusammen, dass die Kugel 10 in bezug auf die möglichen Lateralkräfte abgestützt ist. Da in Richtung der dritten Fluidöffnung 4 kaum Lateralkräfte auf die Kugel 10 einwirken, fluchtet die Öffnung 22 der Aussparung 18 mit der dritten Fluidöffnung 4 (Fig. 3).

Anstelle einer Fixierung durch Einschraubteile könnte die Kugel auch durch Federelemente im Gehäuse fixiert werden. Beispielsweise könnte das Lagerelement in Richtung der Drehachse 28 federnd an der Kugel abgestützt werden. Eine andere Variante besteht darin, dass die Aussparung nach vorne durch einen federnden Steg begrenzt wird. In beiden Fällen wäre die Kugel nach dem Einsetzen in das Gehäuse fixiert, so dass die Einschraubelemente nur noch die eigentliche Dichtfunktion übernehmen müssten.

Der fertig zusammengesetzte Kugelhahn ist aus der Fig. 7 in einem horizontalen Längsschnitt ersichtlich. In dieser Darstellung ist eine von fünf möglichen Betriebsstelllungen der Kugel 10 eingezeichnet. Ausserdem ist ersichtlich, dass in sämtlichen drei Fluidöffnungen 2, 3, 4 je ein Einschraubelement 30 aufgenommen ist.

Anzufügen ist, dass im Rahmen des in den Patentansprüchen definierten Schutzbereichs durchaus von vorgängigem Ausführungsbeispiel abweichende Gestaltungen eines Kugelhahns möglich sind. Beispielsweise könnte die zum Einführen des Lagerlements in die Aussparung vorgesehene Öffnung weggelassen werden, so dass das Lagerelement allseitig geführt wird. Dafür könnte das Lagerelement in Richtung der Drehachse der Kugel federnd an letzterer abgestützt werden. In diesem Fall ist die Kugel nach dem Einsetzen in das Gehäuse bereits fixiert und braucht nicht zusätzlich gesichert zu werden.

## Patentansprüche

1. Dreiwegekugelhahn, mit einem einstückig ausgebildeten T-förmigen Gehäuse (1), wobei das Gehäuse (1) drei Fluidöffnungen (2, 3, 4) aufweist, wobei zwei Fluidöffnungen (2, 3) koaxial zueinander und die dritte Fluidöffnung (4) im rechten Winkel dazu angeordnet ist und mit einer drehbar darin aufgenommenen Kugel (10), wobei die Kugel (10) und das Gehäuse (1) derart aufeinander abgestimmt sind, dass die Kugel (10) durch die dritte Fluidöffnung (4) von aussen in das Gehäuse (1) einsetzbar ist, wobei die Kugel (10) an einer ersten Lagerstelle (26) einseitig im Gehäuse (1) abgestützt ist, und wobei eine weitere, der ersten Lagerstelle (26) diametral gegenüberliegende Lagerstelle (27) zur Abstützung der Kugel (10) vorgesehen ist, wobei die weitere Lagerstelle (27) durch ein Lagerelement (16) und eine korrespondierende Führung (18) gebildet ist, **dadurch gekennzeichnet,**
**dass** das Lagerelement (16) einstückig an der Kugel (10) ausgebildet ist und die Führung (18) am Gehäuse (1) ausgebildet ist, dass die Kugel (10) auf der Unterseite mit einer Abflachung (15) versehen ist, aus welcher das Lagerelement (16) vorsteht, dass eine zum Einführen des Lagerelements (16) in die Führung (18) vorgesehene Öffnung (22) mit der dritten Fluidöffnung (4) fluchtend ausgebildet ist, und dass ferner in sämtlichen Fluidöffnungen (2, 3, 4) je ein Mittel (30) zum Fixieren der in das Gehäuse (1) eingesetzten Kugel (10) vorgesehen sind.

2. Dreiwegekugelhahn nach Anspruch 1, **dadurch gekennzeichnet, dass** die Führung als Aussparung (18) ausgebildet ist und eine Öffnung (22) aufweist, über welche das Lagerelement (16) in die Aussparung (18) einführbar ist.

3. Dreiwegekugelhahn nach zumindest einem der Ansprüche 1 oder 2, **dadurch gekennzeichnet, dass** die zur Aufnahme des Lagerelements (16) vorgesehene Führung (18) zumindest teilweise durch ein federndes Element begrenzt ist,

4. Dreiwegekugelhahn nach zumindest einem der Ansprüche 1 bis 3, **dadurch gekennzeichnet, dass** das Lagerelement (16) in Richtung der Drehachse (28) der Kugel (10) federnd abgestützt ist,

5. Dreiwegekugelhahn nach zumindest einem der vorhergehenden Ansprüche, **dadurch gekennzeichnet, dass** die Kugel (10) mit einer Ausnehmung (13) versehen ist, in welche ein als Lagerbolzen für die ersten Lagerstelle (26) dienender Zapfen (24) einführbar ist.

6. Dreiwegekugelhahn nach zumindest einem der vorhergehenden Ansprüche, **dadurch gekennzeichnet, dass** das Gehäuse (1) eine Bohrung (8) zur Aufnahme des Zapfens (24) aufweist, wobei der Zapfen (24) einen Fortsatz (25) aufweist, dessen Form mit der Ausnehmung (13) der Kugel (10) korrespondiert, und wobei der Zapfen (24) von der Innenseite des Gehäuses (1) her in diese Bohrung (8) einsetzbar ist und der Fortsatz (25) den Zapfen (24) beim Einsetzen der Kugel (10) in das Gehäuse (1) in die Ausnehmung (13) einführbar ist.

7. Dreiwegekugelhahn nach Anspruch 6, **dadurch gekennzeichnet, dass** der Fortsatz (25), zum form- und kraftschlüssigen Verbinden des Zapfens (24) mit der Kugel (10), im wesentlichen rechteckig ausgebildet ist.

8. Dreiwegekugelhahn nach zumindest einem der vorhergehenden Ansprüche, **dadurch gekennzeichnet, dass** die Kugel (10) auf der Oberseite mit einer Abflachung (12) versehen ist, in welche die zur Aufnahme des Zapfens (24) vorgesehene Ausnehmung (13) eingelassen ist.

9. Dreiwegekugelhahn nach zumindest einem der vorhergehenden Ansprüche, **dadurch gekennzeichnet, dass** die Fluidöffnungen (2, 3, 4) des Gehäuses (1) mit je einem Innengewinde (5) versehen sind, und dass in die Innengewinde (5) einschraubbare Einschraubelemente (30) vorgesehen sind, welche als Mittel zum Fixieren der in das Gehäuse (1) eingesetzten Kugel (10) vorgesehen sind.

10. Dreiwegekugelhahn nach Anspruch 9, **dadurch gekennzeichnet, dass** zwischen dem Einschraubelement (30) und der Kugel (10) jeweils eine Dichtung (33) angeordnet ist.

11. Dreiwegekugelhahn nach einem der Ansprüche 5 bis 8, **dadurch gekennzeichnet, dass** der Zapfen (24) am Ende mit einem Betätigungshebel versehen ist.

## Claims

1. Three-way ball valve, comprising a T-shaped housing (1) formed in one piece, the housing (1) having three fluid openings (2, 3, 4), two fluid openings (2, 3) being arranged coaxially with each other and the third fluid opening (4) being arranged at right angles thereto, and comprising a ball (10) accommodated therein such that it can rotate, the ball (10) and the housing (1) being matched to each other in such a way that the ball (10) can be inserted into the housing (1) from outside through the third fluid opening (4), the ball (10) being supported on one side in the housing (1) at a first bearing point (26), and a further bearing point (27) located diametrically opposite the first bearing point (26) being provided to support the ball (10), the further bearing point (27) being formed by a bearing element (16) and a corresponding guide (18), **characterized in that** the bearing element (16) is formed in one piece on the ball (10) and the guide (18) is formed on the housing (1), **in that** the ball (10) is provided on the underside with a flat (15) from which the bearing element (16) projects, **in that** an opening (22) provided for the introduction of the bearing element (16) into the guide (18) is formed in alignment with the third fluid opening (4), and **in that**, moreover, in each case a means (30) of fixing the ball (10) inserted into the housing (1) is provided in all the fluid openings (2, 3, 4).

2. Three-way ball valve according to Claim 1, **characterized in that** the guide is formed as a recess (18) and has an opening (22) via which the bearing element (16) can be introduced into the recess (18).

3. Three-way ball valve according to at least one of Claims 1 and 2, **characterized in that** the guide (18) provided to accommodate the bearing element (16) is at least partly bounded by a resilient element.

4. Three-way ball valve according to at least one of Claims 1 to 3, **characterized in that** the bearing element (16) is supported resiliently in the direction of the axis of rotation (28) of the ball (10).

5. Three-way ball valve according to at least one of the preceding claims, **characterized in that** the ball (10) is provided with a cut-out (13) into which a pin (24) serving as a bearing pin for the first bearing point (26) can be introduced.

6. Three-way ball valve according to at least one of the preceding claims, **characterized in that** the housing (1) has a bore (8) to accommodate the pin (24), the pin (24) having an extension (25) whose shape corresponds to the cut-out (13) in the ball (10), and it being possible for the pin (24) to be inserted into this bore (8) from the inner side of the housing (1), and for the extension (25) to introduce the pin (24) into the cut-out (13) when the ball (10) is inserted into the housing (1).

7. Three-way ball valve according to Claim 6, **characterized in that** the extension (25) is of substantially rectangular shape in order to connect the pin (24) to the ball (10) with a form and force fit.

8. Three-way ball valve according to at least one of the preceding claims, **characterized in that** the ball (10) is provided on the upper side with a flat (12), in which the cut-out (13) provided to accommodate the pin (24) is made.

9. Three-way ball valve according to at least one of the preceding claims, **characterized in that** the fluid openings (2, 3, 4) of the housing (1) are each provided with an internal thread (5), and **in that** screw-in elements (30) are provided which can be screwed into the internal thread (5) and are provided as means for fixing the ball (10) inserted into the housing (1).

10. Three-way ball valve according to Claim 9, **characterized in that** in each case a seal (33) is arranged between the screw-in element (30) and the ball (10).

11. Three-way ball valve according to one of Claims 5 to 8, **characterized in that** the pin (24) is provided with an actuating lever at the end.

## Revendications

1. Robinet à boisseau sphérique à trois voies, comprenant un boîtier en forme de T (1) réalisé d'une seule pièce, le boîtier (1) présentant trois ouvertures de fluide (2, 3, 4), deux ouvertures de fluide (2, 3) étant disposées coaxialement l'une à l'autre et la troisième ouverture de fluide (4) étant disposée à angle droit par rapport à celles-ci, et comprenant un boisseau (10) reçu dans celui-ci, le boisseau (10) et le boîtier (1) étant ajustés l'un à l'autre de telle sorte que le boisseau (10) puisse être inséré à travers la troisième ouverture de fluide (4) depuis l'extérieur dans le boîtier (1), le boisseau (10) étant supporté d'un côté dans le boîtier (1) au niveau d'une première position de palier (26), et une deuxième position de palier (27) diamétralement opposée à la première position de palier (26) étant prévue pour supporter le boisseau (10), la position de palier supplémentaire (27) étant formée par un élément de palier (16) et une coulisse correspondante (18), **caractérisé en ce que** l'élément de palier (16) est réalisé d'une seule pièce sur le boisseau (10) et la coulisse (18) est réalisée sur le boîtier (1), **en ce que** le boisseau (10) est pourvu sur la face inférieure d'un méplat (15), duquel l'élément de palier (16) fait saillie, **en ce qu'**une ouverture (22) prévue dans la coulisse (18) pour l'insertion de l'élément de palier (16) est réalisée en affleurement avec la troisième ouverture de fluide (4), et **en ce qu'**en outre des moyens respectifs (30) pour la fixation du boisseau (10) inséré dans le boîtier (1) sont prévus dans toutes les ouvertures de fluide (2, 3, 4).

2. Robinet à boisseau sphérique à trois voies selon la revendication 1, **caractérisé en ce que** la coulisse est réalisée sous forme d'évidement (18) et présente une ouverture (22) par le biais de laquelle l'élément de palier (16) peut être inséré dans l'évidement (18).

3. Robinet à boisseau sphérique à trois voies selon au moins l'une des revendications 1 et 2, **caractérisé en ce que** la coulisse (18) prévue pour recevoir l'élément de palier (16) est limitée au moins partiellement par un élément à ressort.

4. Robinet à boisseau sphérique à trois voies selon au moins l'une des revendications 1 à 3, **caractérisé en ce que** l'élément de palier (16) est supporté à ressort dans la direction de l'axe de rotation (28) du boisseau (10).

5. Robinet à boisseau sphérique à trois voies selon au moins l'une des revendications précédentes, **caractérisé en ce que** le boisseau (10) est pourvu d'un évidement (13) dans lequel peut être inséré un tourillon (24) servant de goujon de palier pour la première position de palier (26).

6. Robinet à boisseau sphérique à trois voies selon au moins l'une des revendications précédentes, **caractérisé en ce que** le boîtier (1) présente un alésage (8) pour recevoir le tourillon (24), le tourillon (24) présentant une saillie (25) dont la forme correspond à l'évidement (13) du boisseau (10), et le tourillon (24) pouvant être inséré depuis le côté intérieur du boîtier (1) dans cet alésage (8) et la saillie (25) du tourillon (24), lors de l'insertion du boisseau (10) dans le boîtier (1), pouvant être enfoncée dans l'évidement (13).

7. Robinet à boisseau sphérique à trois voies selon la revendication 6, **caractérisé en ce que** la saillie (25), en vue d'une connexion par blocage et par adhérence du tourillon (24) au boisseau (10), est réalisée avec une forme essentiellement rectangulaire.

8. Robinet à boisseau sphérique à trois voies selon au moins l'une des revendications précédentes, **caractérisé en ce que** le boisseau (10) est pourvu sur la surface supérieure d'un méplat (12) dans lequel est réalisé l'évidement (13) prévu pour recevoir le tourillon (24).

9. Robinet à boisseau sphérique à trois voies selon au moins l'une des revendications précédentes, **caractérisé en ce que** les ouvertures de fluide (2, 3, 4) du boîtier (1) sont pourvues d'un filetage interne respectif (5) et **en ce que** l'on prévoit des éléments de vissage (30) pouvant être vissés dans les filetages internes (5), lesquels sont prévus en tant que moyens de fixation du boisseau (10) inséré dans le boîtier (1).

10. Robinet à boisseau sphérique à trois voies selon la revendication 9, **caractérisé en ce que** l'on dispose entre l'élément de vissage (30) et le boisseau (10) à chaque fois un joint d'étanchéité (33).

11. Robinet à boisseau sphérique à trois voies selon au moins l'une des revendications 5 à 8, **caractérisé en ce que** le tourillon (24) est pourvu à son extrémité d'un levier d'actionnement.
